# EUROPEAN PATENT SPECIFICATION

(11) **EP 0 475 489 B1**
(45) Date of publication and mention of the grant of the patent: **01.06.1994**
(21) Application number: 91202127.6
(22) Date of filing: 21.08.1991
(51) Int. Cl.: A01G 1/00, E04D 11/00

(54) **Ground cover, provided with vegetation**
Bodenbedeckung mit Vegetation
Recouvrement de sol avec végétation

(30) Priority: 22.08.1990 NL 9001854
(43) Date of publication of application: 18.03.1992
(73) Proprietor: BEHEERMAATSCHAPPIJ OP DE KAAI B.V., 3361 AP Sliedrecht (NL)
(72) Inventor: Behrens, Wolfgang, W-2833 Gross Ippener (DE); de Winter, Maarten, NL-3361 AP Sliedrecht (NL)
(74) Representative: Lips, Hendrik Jan George, Ir.

(56) References cited:
- EP-A- 0 047 365
- DE-A- 3 328 110
- DE-A- 3 805 069
- DE-U- 8 606 742
- FR-A- 2 006 203

## Description

The invention relates to to a ground cover as this is described in the preamble of claim 1.

Such a ground cover is known by EP-A-O 047 365. In case of this known cover the moisture regulating layer present between the fleece and the ground or underground is formed by a draining layer. So water what is flowing through the fleece is removed via said draining layer to the environment. By this the danger exists that the ground cover will become to dry when during some time it is not watered.

Now the object of the invention is to improve said known ground cover and this is obtained by applying the features as indicated in the characterizing portion of claim 1.

In this way the ground cover according to the invention can be used also in case when the cover is used on dry grounds and roofs whereby the ground cover might not retain enough water and would dry up. Although this might be prevented by regular irrigation, this can be rather laborious such as in case that the ground cover is positioned on roofs and on verges.

The working of the ground cover according to the invention can be further improved by closing of said bottom layer, at least at its bottom, by a water absorbing plastic fleece.

Further DE-A-3805069 describes a ground cover comprising a cultivating layer, a moisture regulating layer and a draining layer. The moisture regulating layer as such comprises several layers and the underside of it is provided with spacers so that a complicated construction is obtained.

The invention will be further explained in the following by way of examples referring to the drawing. In the drawing, each time in schematical side view, is shown by:
Fig. 1 a ground cover with moss-herbs vegetation for water retaining grounds,
Fig. 2 a second embodiment of a ground cover with grass-herbs vegetation for water retaining grounds,
Fig. 3 a ground cover with moss-herbs vegetation for dry grounds, and
Fig. 4 another embodiment of a ground cover with moss-herbs vegetation for dry grounds.

In the figures corresponding elements are indicated by the same reference numbers.

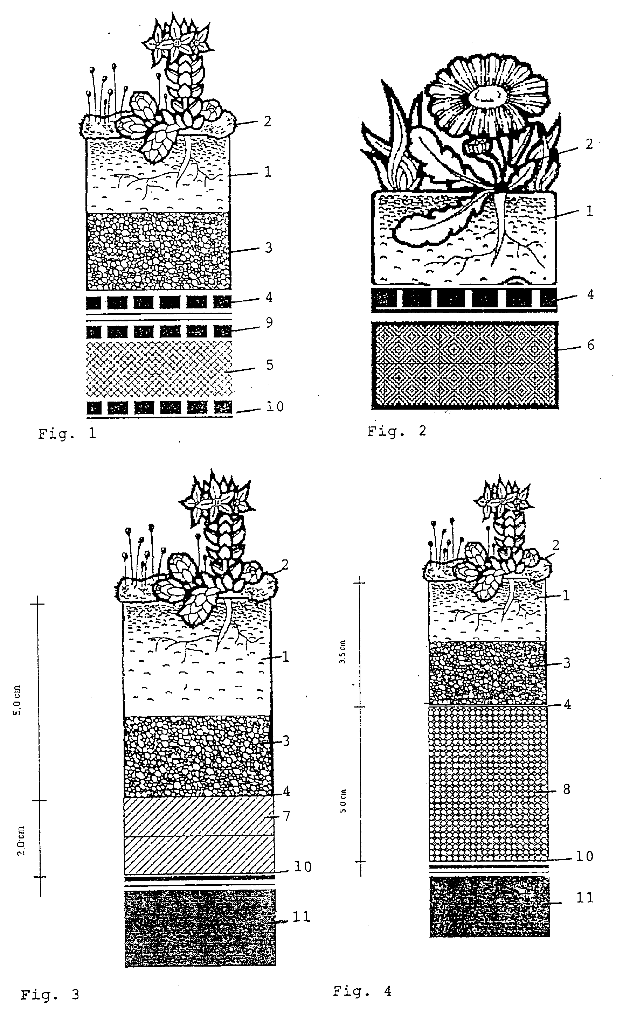

In Fig. 1 a first ground cover is shown; this concerns a ground cover for a water retaining ground, for example intended for covering a verge. This ground cover consists of a nutrient medium 1, consisting of constituents like earth, sand, lime and minerals. On this nutrient medium substrate is a vegetation 2, which in the shown embodiment consists of moss and herbs. Beneath nutrient medium substrate 1 lies a nutrient medium or ground substrate 3 kept in structural connection, consisting of earth, gravel, lime etc., which forms a combined agglomerate together with layer 1 and is applied in a structure maintaining layer, for example a so-called loop mat as described in European Patent 172839. This layer 3 has a moisture buffering action. When the upper layer becomes too dry, moisture kept in this ground substrate is returned, possibly with minerals dissolved therein. This ground substrate is closed off at the bottom by a so-called root-obstructing fleece 4, formed by a fine fleece of unwoven plastic textile, which is able to let water through, while weed roots that could otherwise shoot through, are stopped.

Below the so formed ground cover lies a draining layer 5, consisting of a very roughly woven mat of hard plastic thread, covered at top and bottom by a fine-woven fleece of plastic textile 9 and 10 respectively, that are water absorbing and permeable.

With the thus formed ground cover, intended for being laid onto a ground water containing groundwork, for example a verge or central verge, the vegetation system is self-maintaining, that is, the nutrient medium 1 and the ground substrate 3 see to it, that enough moisture is present for the vegetation of mosses and herbs. Moss already has a moisture retaining effect on its ground c.q. the nutrient medium, and the ground substrate serving as a water buffer sees to it, that in case of dryness water still can be supplied from below. The fine fleece 4 serves as so-called anti-root cloth, to prevent suddenly upcoming weeds with their roots from shooting through downwards. As is known, weeds need more moisture and more space than the vegetation of moss and herbs especially selected for this ground cover, and thanks to this anti-root cloth possible weed roots can not shoot through so that the weeds do not get the chance to develop.

An essential part of de above described structure is constituted by the draining layer 5, which forms as it were a spacer between the ground cover lying on top and the ground.

Since this draining layer has very coarse openings, it forms an excellent draining layer, through which superfluous water from the ground substrate 3 can flow out downwards, while on the other hand superfluous water from the subsoil will never be able to rise, since the draining layer can not present capillary action. This draining layer 5 is closed off at top and bottom sides with closing fleeces 9 and 10 to prevent material from the subsoil or from above from penetrating the draining layer itself with in the most extreme case the result being that this layer instead of draining would absorb water by the obtained capillary action. Particularly suitable material for this draining layer is so-called Enkadrain P32*® double-sided fleece, which is commercially available.

In Fig. 2 an embodiment for a ground cover with grass and herbs is shown. Like in Fig. 1 there is again a nutrient medium 1 kept in structural connection, with on it the vegetation 2 of grass and herbs. In this case, there is no ground substrate beneath the nutrient medium 1, but immediately an anti-root cloth 4, while a draining layer 6 has been applied beneath the anti-root cloth 4, which layer consists of ribbed fleece material, capable to retain a certain amount of water and to drain excess water. A suitable material for such a draining layer 6 is for example Hate-Vlies type L206*®, a commercially available, ribbed material.

In case of the embodiment of Fig. 2, in contrast to Fig. 1 there is no absolute insulation in relation to the ground, which among other things is related to the fact, that a grass plantation needs more water than a moss plantation. For the rest the function is principally the same, be it, that the draining layer 6 performs the function of buffer layer at the same time.

Fig. 3 shows a ground cover with moss-herbs vegetation, which like in Fig. 1 has a nutrient medium 1 kept in structure connection with on it the moss-herbs vegetation 2 and underneath a ground substrate 3 kept in structure connection, with moisture buffering action and also serving as mineral source and closed off by an anti-root cloth 4. Underneath lies a double, strongly water buffering fleece layer 7, for which for example two layers of Hate-Vlies type L206*® can be used. This double fleece layer has an excellent water buffering action, with which it is guaranteed, that there will always be a sufficient excess of water, so that also in cases of dryness water can still be passed through the ground substrate to the nutrient medium and thus the vegetation. The water buffering double fleece layer 7 is closed off at the bottom bij a fleece 10, which is root-obstructing. In this case, the ground 11 is dry, and a such like ground cover is suitable for being laid onto a groundwork of sandy ground or stone. It can also serve as cover for roofs.

In Fig. 4 a ground cover according to the invention is shown. Regarding the parts 1, 2, 3 and 4 it substantially corresponds to the embodiment of Fig. 3. The essential difference however is the water buffering beneath. Instead of the double fleece layer 7, use is made of structure 8, consisting of fine porous plastic foam, which was sprayed into a roughly woven mat of hard plastic thread. This structure is closed at the bottom by a permeable and sealing fleece 10. Here, the ground 11 is a dry ground as well, and the described construction is particularly suitable for covering roofs and bunkers. It has been found, that such a combination of porous foam in a structure mat loses little or no water at all at the sides, so that such a ground covering can not only be applied horizontally, but slanting under a strong slope as well. This makes such a ground cover pre-eminently suitable for roofs and for bunker coating with sloping walls. In practice it has proved to be very efficient to use said Enkadrain P32(*)® sprayed full with so-called Gardenfoam RG30*® as a structure mat. With such a ground cover a moisture supply for the internal system is guaranteed even with a relatively long period of dryness.

## Claims

1. Ground cover, provided with vegetation for covering grounds (11) and groundworks like verges and roofs consisting of a nutrient medium substrate (1) held together by a structure and with vegetation (2) cultivated thereon, a root-obstructing fleece (4), which is permeable to water which covers the underside of the nutrient medium substrate, and a moisture regulating layer (8) adjusted to the soil conditions between said fleece (4) and the ground (11) or underground to be covered, characterized in that said moisture regulating layer (8) is a buffer layer, capable of absorbing moisture and retaining it, said buffer layer consisting of a roughly woven mat of hard plastic thread like polyester, sprayed full with a fine porous plastic foam.

2. Ground cover according to claim 1, characterized in that said buffer layer at least at its bottom is closed off by a water absorbing plastic fleece (10).

## Patentansprüche

1. Mit Vegetation versehene Bodenabdeckung zum Bedecken von Böden (11) und Gründungen, wie Bankette bzw. Seitenstreifen oder Dächer, bestehend aus einem durch eine Struktur zusammengehaltenen Nährmittelsubstrat (1) mit darauf kultivierter Vegetation (2), einem Wurzelblockiervlies (4), das für Wasser durchlässig ist und die Unterseite des Nährmittelsubstrats bedeckt, und einer auf die Erdreichbedingungen zwischen dem Vlies (4) und dem Boden (11) oder abzudeckenden Untergrund eingestellten Feuchtigkeitsregulierschicht (8), dadurch gekennzeichnet, daß die Feuchtigkeitsregulierschicht (8) eine Pufferschicht ist, die Feuchtigkeit zu absorbieren und zurückzuhalten vermag, welche Pufferschicht aus einer grob gewebten Matte aus harten Kunststoffäden, wie Polyester, die vollständig mit einem feinen porösen Kunststoffschaum ausgespritzt ist, besteht.

2. Bodenabdeckung nach Anspruch 1, dadurch gekennzeichnet, daß die Pufferschicht zumindest an ihrem Boden durch ein wasserabsorbierendes Kunststoffvlies (10) abgeschlossen ist.

## Revendications

1. Recouvrement de sol, muni de végétation pour recouvrir les sols (11) et les remblais comme les rebords et les toits, constitué d'un substrat de milieu nutritif (1) maintenu cohérent par une structure et avec de la végétation (2) cultivée sur ce substrat,d'une toison (4) empêchant la pénétration des racines, qui est perméable à l'eau et qui recouvre le côté inférieur du substrat de milieu nutritif, d'une couche régulant l'humidité (8) ajustée aux conditions de sol entre ladite toison (4) et le sol (11) ou sous-sol à recouvrir, caractérisé en ce que ladite couche régulant l'humidité (8) est une couche tampon, capable d'absorber l'humidité et de la retenir, ladit couche tampon consistant en un mat grossièrement tissé de fil de matière plastique dure comme le polyester, sur la totalité duquel on a pulvérisé une fine mousse de matière plastique poreuse.

2. Recouvrement de sol selon la revendication 1, caractérisé en ce que ladite couche tampon, au moins en son fond, est scellée par une toison de matière plastique absorbant l'eau (10).
